# EUROPEAN PATENT APPLICATION

(11) **EP 3 812 558 A1**
(43) Date of publication of application: **28.04.2021**
(21) Application number: 19843751.9
(22) Date of filing: 12.07.2019
(51) Int. Cl.: F01N 13/08, F01N 13/18

(54) **FLEXIBLE SECTION STRUCTURE FOR EXHAUST PIPE**

(30) Priority: 28.07.2018 CN 201810849518
(71) Applicant: Ningbo Kinrom Industries Co., Ltd, Ningbo, Zhejiang 315000 (CN)
(72) Inventor: DONG, Jingrong, Ningbo, Zhejiang 315000 (CN)
(74) Representative: ZHAOffice SPRL
(86) International application number: PCT/CN2019/095705
(87) International publication number: WO 2020/024781

(57) **Abstract**

A flexible joint structure for an exhaust pipe, mainly used inside vehicle exhaust pipes, including a bellows (2) and a braided hose (3) that are arranged coaxially in sequence from the inside to the outside, wherein the braided hose (3) includes at least two segments, and both ends of each segment are fixedly connected to the bellows (2) at the inner side by means of a fixing member, and the length of each section of the braided hose (3) is less than or equal to 200mm. The flexible joint structure of the exhaust pipe according to the present disclosure has increased damping performance, which can improve the NVH performance of the entire vehicle. Additionally, in the transverse front-wheel drive vehicle, when the front portion of the exhaust system swings greatly, the shear deformation of the bellows inside the braided hose can be transformed into the bending deformation due to the presence of the braided hose attached closely to the bellows. In the longitudinal rear-wheel drive vehicle,when the front portion of the exhaust system rotates, the braided hose can share part of the torque well, thereby greatly reducing the stress of the internal bellows and increasing its service life.

## Description

### TECHNICAL FIELD

The present disclosure relates to the field of vehicle technology, in particular to a flexible joint used in the exhaust system of the vehicle engine.

### BACKGROUND

The flexible joint is a part that is usually arranged in the exhaust system of the vehicle engine. One end of the exhaust system is connected to the engine, and the other end is connected to the vehicle body. The operation of the engine would produce vibration and swing, which will be transmitted to the vehicle body through the exhaust system and have a bad impact on the ride comfort. The vibration of the vehicle body generated when the vehicle is running on rough roads will in turn be transmitted to the front section of the exhaust system, the manifold and the engine through the exhaust system, which will also cause adverse effects on NVH (Noise Vibration and Harshness) and durability.

In order to mitigate and ameliorate the above problems, a flexible joint is usually placed at the location where the exhaust system is connected to the engine manifold to block the vibration from both directions. The flexible joint structure usually comprises an inner layer of metal bellows and an outer netted hose. The two layers are clamped and fixed together by end caps at the ends.

The outer-netted hose may be arranged generally in two configurations. One configuration is a knitted mesh structure. The knitted mesh structure is usually formed by weaving metal wires into a knitted structure. Each strand of wire is almost free to move around locally. Therefore, the knitted mesh structure usually has a certain degree of elasticity and can be attached tightly to the bellows to the extent of its elasticity, so that the vibration of the bellows can be suppressed effectively. However,there are also obvious weaknesses. When a break point occurs in the knitted structure,the entire knitted structure would gradually disperse and lose its function, just like the common phenomenon in knitted stockings. In addition, due to its large elastic range but poor supporting ability, it cannot restrict the movement of the bellows in multiple directions. When large swings occur in multiple directions, the deformation range of the bellows cannot be restricted effectively and thus the bellows is likely to be fatigue broken.

The other configuration is a braided hose structure. The braided hose is usually made of multiple metal wires in two directions crossing each other. The appearance of the braided hose is relatively dense, so it can effectively protect the inner bellows. However, since it is hard to control the gap between the inner and outer layers of a usually long flexible joint, the ability to suppress vibration is low and thus the application is limited.

In addition, due to the large swing and vibration of the engine, the stress on the flexible joint is usually large. In order to reduce the stress, the length of the flexible joint is usually increased or the outer diameter of the flexible joint is increased. However, the flexible joint is usually arranged in a small space and the swing of the flexible joint tends to interfere with the surrounding parts, so it is difficult to arrange a flexible joint with a longer length or a larger outer diameter, which is another difficulty in the application of the flexible joint.

### SUMMARY

The technical problem to be solved by the present disclosure is to provide flexible joint structure for an exhaust pipe that can reduce the stress of the bellows, have extended service life, and improve the NVH performance of the entire vehicle.

In order to the solve the technical problem as set forth above, there is provided a flexible joint structure for an exhaust pipe, comprising a bellows and a braided hose that are arranged coaxially in sequence from inside to outside, wherein the braided hose includes at least two segments, both ends of each segment are fixedly connected to the bellows at an inner side of the braided hose by means of a fixing member, and the length of each segment of the braided hose is less than or equal to 200mm.

Preferably, the fixing member comprises a first fixing member located at an end of the bellows and a second fixing member located at the middle portion of the bellows.

As an optional embodiment of the present disclosure, the braided hose includes multiple segments which are separated and connected in sequence, and the ends of each segment are fixedly connected to the bellows by means of the fixing member.

As another optional embodiment of the present disclosure, the braided hose has an integral structure, the fixing member comprises a first fixing member and a second fixing member, the ends of the braided hose are fixedly connected to the bellows by means of the first fixing member, and the middle portion of the braided hose is fixedly connected to the bellows by means of the second fixing member, so as to form multiple segments

Preferably, the structures of the first fixing member and the second fixing member are the same or different.

Preferably, the first fixing member has an enclosed sleeve structure or a ring-shaped clamp structure; and the second fixing member has a ring-shaped clamp structure.

As various embodiments of the present disclosure, in the case where the first fixing member is an enclosed sleeve structure, one side of the first fixing member has a flange, and at least one side of the second fixing member has a flange;
the first fixing member and/or the second fixing member have a ring-shaped clamp structure, ends of which are overlapped and fixed to each other;
the first fixing member and/or the second fixing member have a ring-shaped clamp structure which includes at least two connecting pieces connected with each other, ends of each connecting piece are provided with a fixing lug protruding outward, and the fixing lugs at ends of adjacent connecting pieces are fixed by a fastener or welding;
the first fixing member and/or the second fixing member have an integral ring clamp structure, each end of which has a fixing lug protruding outward, and the fixing lugs at the ends are fixed by a fastener or welding; or
the first fixing member and/or the second fixing member fix the bellows and the braided hose through internal-expansion and external-pressure and/or by welding.

Preferably, the bellows includes a straight segment and a corrugated segment, and the second fixing member is provided at the straight segment.

Preferably, the length of each segment of the braided hose is 60mm-150mm.

Preferably, the length of each segment of the braided hose is 60mm-120mm.

Preferably, the flexible joint structure for an exhaust pipe further comprises an inner tube coaxially arranged inside the bellows. The end of the inner tube is fixedly connected with the end of the bellows, and the inner tube is a buckle hose or a braided hose.

Preferably, the bellows has multiple bellows segments. Both ends of each bellows segment are provided with a small corrugated portion. The corrugation height in the small corrugated portion is lower than the corrugation height in the middle portion of a bellows segment.

Compared with the prior art, the flexible joint structure for an exhaust pipe according to the present disclosure has the following advantages: the braided hose has multiple relatively short segments and the ends of each segment of the braided hose are fixed to and pressed against the bellows such that the braided hose can be attached to the bellows therein tightly, resulting in increased damping performance which can improve the NVH performance of the entire vehicle. More importantly, since the ends of each segment of the braided hose are fixed to and pressed against the bellows and the wires of the braided hose are not able to be stretched, the movement of the bellows therein in the axial, radial and torsional direction at each end can be restrained. In this way, in the horizontal front-wheel drive vehicle, when the front portion of the exhaust system swings greatly, the shear deformation of the bellows inside the braided hose can be transformed into the bending deformation due to the presence of the braided hose attached closely to the bellows. In the longitudinal rear-wheel drive vehicle, when the front portion of the exhaust system rotates, the braided hose can share part of the torque well, thereby greatly reducing the stress of the internal bellows and increasing its service life.

In addition, due to the reduced stress, flexible joints may have shorter length or smaller outer diameters, thereby overcoming the technical problem raised from the small space and the interference with the surrounding parts. Additionally, the use of high-temperature-resistant precious materials can also be reduced, resulting in lower costs.

### BRIEF DESCRIPTION OF THE DRAWINGS

Fig. 1 schematically shows a flexible joint for an exhaust pipe according to the first embodiment of the present disclosure;
Fig. 2 is the sectional view taken along the line A-A in Fig. 1;
Fig. 3 schematically shows a flexible joint for an exhaust pipe according to the second embodiment of the present disclosure;
Fig. 4 schematically shows a flexible joint for an exhaust pipe according to the third embodiment of the present disclosure;
Fig. 5 schematically shows a flexible joint for an exhaust pipe according to the fourth embodiment of the present disclosure;
Fig. 6 is the sectional view taken along the line B-B in Fig. 5;
Fig. 7 schematically shows a flexible joint for an exhaust pipe according to the fifth embodiment of the present disclosure;
Fig. 8 schematically shows a flexible joint for an exhaust pipe according to the sixth embodiment of the present disclosure;
Fig. 9 schematically shows a flexible joint for an exhaust pipe according to the seventh embodiment of the present disclosure;
Fig. 10 is the sectional view taken along the line C-C in Fig. 7;
Fig. 11 schematically shows a flexible joint for an exhaust pipe according to the eighth embodiment of the present disclosure; and
Fig. 12 schematically shows a flexible joint for an exhaust pipe according to the ninth embodiment of the present disclosure.

### DETAILED DESCRIPTION OF EMBODIMENTS

The present disclosure will be described in further detail with reference to the accompanying drawings.

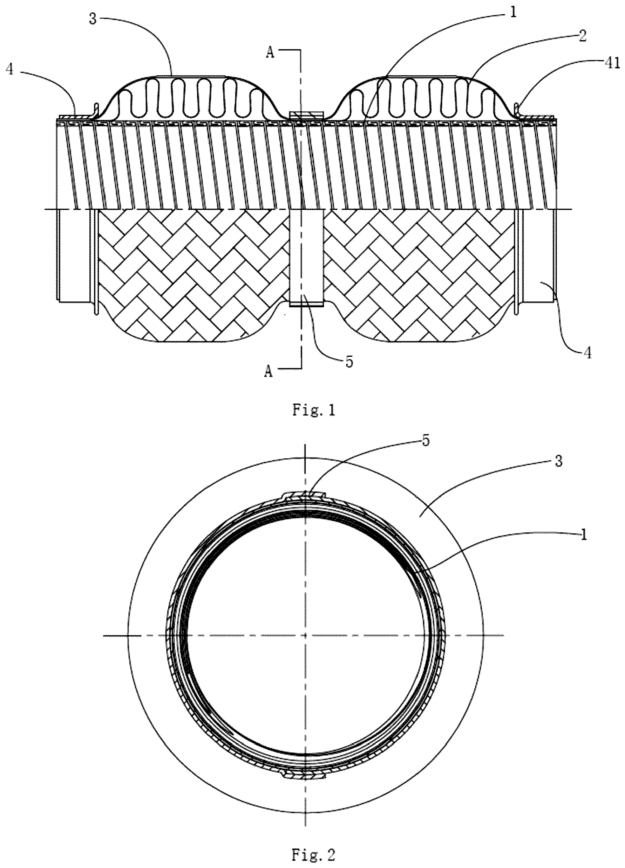

Figs. 1-2 schematically show a flexible joint structure for the exhaust pipe according to the first embodiment of the present disclosure. The flexible joint structure includes an inner tube 1, a bellows 2 surrounding the inner tube 1, and a braided hose 3 arranged on the outside of the bellows 2. The end of the inner tube 1 is fixedly connected to the end of the bellows 2. The fixed connection is realized by compression through internal-expansion and external-pressure and/or by welding. The inner tube 1 is a buckle hose or a braided hose.

The braided hose 3 has multiple segments. Each segment has a length that is less than or equal to 200mm. In addition, the two ends of each segment of the braided hose 3 are fixedly connected to the bellows 2 by a fixing member. Preferably, the bellows may also have multiple segments. Each segment of the bellows is provided with small corrugated portions at its both ends. The height of the corrugation in the small corrugated portion is lower than the height of the corrugation in the middle portion of the bellows between its ends. Each segment of the braided hose 3 is arranged corresponding to each segment of the bellows respectively. That is, the fixing member is arranged at the small corrugated portion of the bellows.

As shown in Fig. 1, the braided hose may includes two segments. The lengths of the two segments are 60mm-150mm respectively. The fixing member includes a first fixing member 4 and a second fixing member 5. The braided hose 3 is fabricated as an integral structure. Through the first fixing member 4, the two ends of the braided hose 3 are fixedly connected to the bellows 2 and the inner tube 1 which are located inside the braided hose 3. The middle portion of the braided hose 3 is fixed to the bellows 2 and the inner tube 1 through the second fixing member 5. The first fixing member 4 has a structure of an enclosed sleeve, which is an annular structure that is continuous and unbroken as a whole. The first fixing member 4 is fixedly connected to the braided hose and the bellows through being compressed directly against the braided hose and the bellows by internal-expansion and external-pressure, or through welding. One side of the first fixing member 4 is provided with a flange 41 extending outward along the radial direction of the flexible joint. The second fixing member 5 has a clamp structure that is closely attached to the braided hose 3 and the bellows 2 therein. The clamp structure is an annular structure with a break. Both ends of the second fixing member 5 are overlapped and fixed to each other. In this embodiment, both ends of the braided hose 3 are fixed by the first fixing member 4. The middle portion of the braided hose 3 is fixed by the second fixing member 5, such that the whole braided hose 3 is divided into two segments by the second fixing member 5. That is, the first fixing member 4 is located at the end of the bellows 2, while the second fixing member 5 is located at the middle portion of the bellows 2.

It should be pointed out here that, in the case where the first fixing member located at the end of the bellows 2 has an enclosed sleeve structure one side of the first fixing member may have or not have a flange. The first fixing member 4 may also have a clamp structure. When the first fixing member 4 have a clamp structure, its structure may be the same as or different from the second fixing member 5. The first fixing member 4 may have a flange on one side, or may not have a flange. However, in order to be able to install the second fixing member 5, which is located at the middle portion of the bellows 2, it is impossible to provide an enclosed sleeve structure but only a clamp structure is applicable. That is, the second fixing member 5 is a ring-shaped component and it has at least one break before it is mounted on the outside of the braided hose 3. Alternatively, the second fixing member 5 may have a structure having adjustable radial size. The second fixing member 5 may have a flange on at least one side. That is, it may have flanges on both sides. The flange structure can increase the rigidity of the fixing member and improve the force which the braided hose wire is under. The first fixing member 4 and the second fixing member 5 may also be fixedly connected to the braided hose and the bellows 2 through being compressed directly against the braided hose and the bellows 2 by internal-expansion and external-pressure, or through welding.

It needs to be emphasized here that the braided hose 3 in the above-mentioned embodiment is an integral structure, and is fixed to the bellows by a second fixing member arranged in the middle portion so as to form multiple segments. It may also be that the braided hose itself has multiple segments arranged in sequence. Both ends of each segment are fixedly connected to the internal bellows 2 by the fixing member. At this time, the fixing member includes the first fixing member located at the end of the bellows 2 and the second fixing member located at the middle portion of the bellows 2. Besides, other fixing structures can also be used. Those skilled in the art can also understand that the fixing member fixes the bellows 2 and the braided hose 3 through internal-expansion and external-pressure and/or through welding. In this embodiment, since the braided hose is divided into multiple segments with a shorter length and the ends of each segment are fixedly connected to the bellows, the gap between the braided hose 3 and the bellows 2 can be controlled and the braided hose 3 can be closely attached to the bellows 2 in the axial direction.

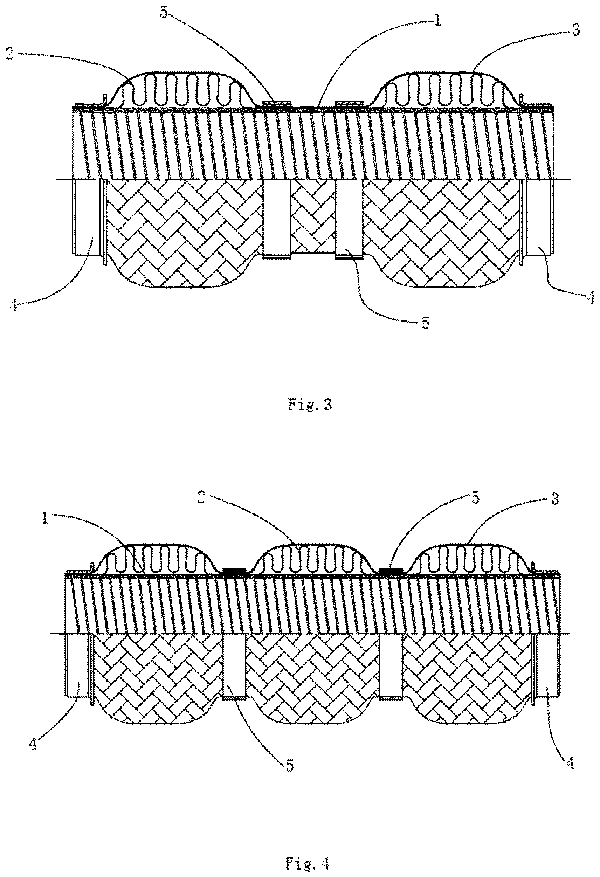

Fig. 3 schematically shows the structure of the flexible joint for an exhaust pipe according to the second embodiment of the present disclosure. In this embodiment, the braided hose matches the bellows 2 which has a straight segment and a corrugated segment. The braided hose 3 is arranged outside the bellows 2 and is divided into three segments. The segment of the braided hose corresponding to the corrugated segment has a length of 60mm-120mm. The segment of the braided hose corresponding to the straight segment has a length of 10mm-150mm. The braided hose 3 also has an integral structure. The two ends of the braided hose 3 are fixed to the bellows 2 and the inner tube 1 therein by the first fixing member 4. The second fixing member 5 is fixed to the middle portion of the braided hose 3 at the portion of the straight segment that is adjacent to the junction between the straight segment and corrugated segment, thus dividing the braided hose 3 into three segments.

The structures of the first fixing member and the second fixing member are similar to those in the first embodiment. The first fixing member may be the same as or different from the second fixing member. They may be a clamp structure, an enclosed sleeve structure, or other suitable structures.

Fig. 4 schematically shows the structure of the flexible joint for an exhaust pipe according to the third embodiment of the present disclosure. In this embodiment, the braided hose 3 is divided into three segments. Similarly to the first embodiment, through the first fixing member 4, the two ends of the braided hose 3 are fixed to the bellows 2 and the inner tube 1 therein. The middle portion of the braided hose 3 is fixed to the bellows 2 and the inner tube 1 therein through the second fixing member 5.

The structures of the first fixing member and the second fixing member are similar to those in the first embodiment. They may be the same as or different from each other. They may be a clamp structure, an enclosed sleeve structure, or other suitable structures.

In the above-mentioned flexible joint structure for the exhaust pipe, the braided hose 3 is equally divided into multiple segments, and the length of each segment does not exceed 200mm. The two ends of each segment are fixed to the bellows 2 and the inner tube 1 therein by the fixing members, thereby significantly reducing the stress of the braided hose 3. Therefore, in the case where the flexible joint structure has a long length, the gap between the braided hose and the bellows therein would not vary too much even when the flexible joint structure is under the radial shaking and the force in the rotation direction around the axis. Thus, the braided hose can always be tightly attached to the bellows and thus share with the bellows the force thereon, so that the bellows would not be easily broken. Thus the service life of the bellows is increased, and the NVH characteristic of the exhaust pipe is also improved.

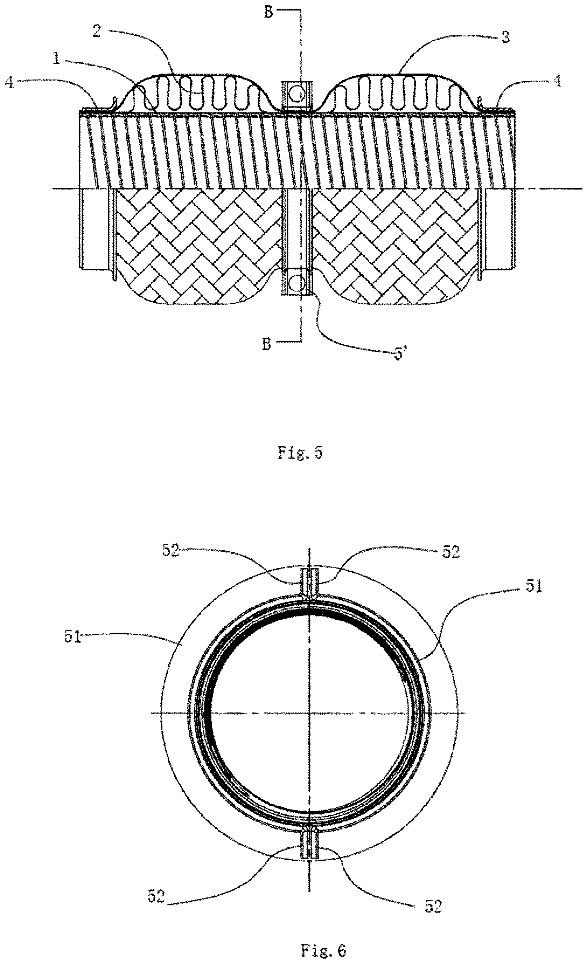

Figs. 5 and 6 schematically show the structure of the flexible joint for an exhaust pipe according to the fourth embodiment of the present disclosure. This embodiment is substantially the same as the first embodiment except for the structure of the second fixing member 5'. The second fixing member 5' is a ring-shaped clamp structure, formed by at least two arc-shaped connecting pieces 51 which are connected together with each other. Both ends of each connecting piece 51 are provided with a fixing lug 52 which protrudes outward. The fixing lugs 52, which belong to the adjacent connecting pieces 51 respectively, are attached to each other and fixedly connected by a fastener or by welding.

Those skilled in the art can understand that the structure of the first fixing member 4 and the second fixing member 5 may be the same or different. They may both be the structure of the first fixing member 4 in the above embodiment. Alternatively, they may be the structure of the second fixing member 5' in the above embodiment.

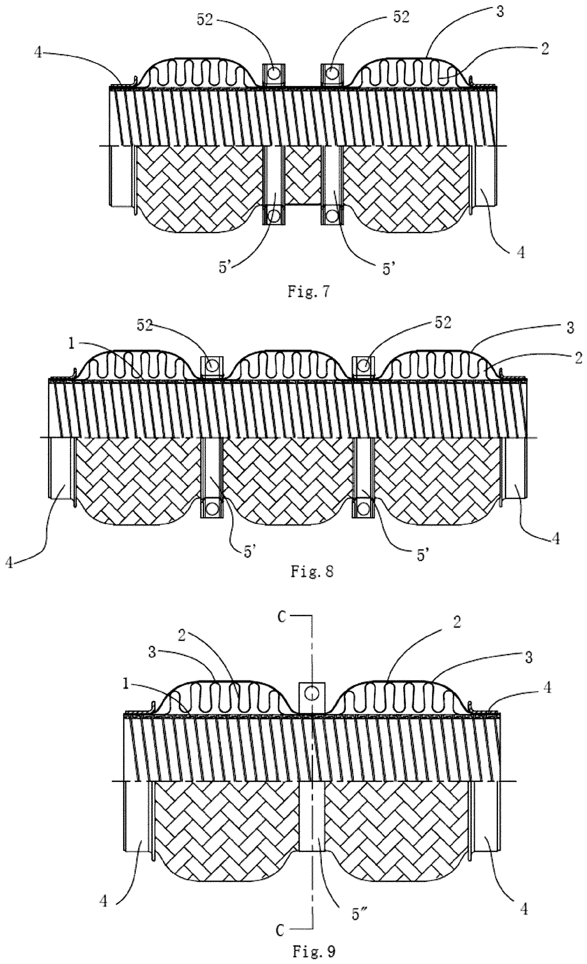

Fig. 7 schematically shows the structure of the flexible joint for an exhaust pipe according to the fifth embodiment of the present disclosure. This embodiment is substantially the same as the second embodiment except for the structure of the second fixing member 5'. The structure of the second fixing member 5' is the same as that in the fourth embodiment. Similarly, the braided hose 3 in this embodiment is divided into three segments. Two segments of them are located outside the corrugated segments of the bellows 2, while the other one segment of them is located, between the above two segments, outside the straight segment of the bellows 2.

Fig. 8 schematically shows the structure of the flexible joint for an exhaust pipe according to the sixth embodiment of the present disclosure. This embodiment is substantially the same as the third embodiment except for the structure of the second fixing member 5'. The structure of the second fixing member 5' is the same as that in the fourth and fifth embodiment.

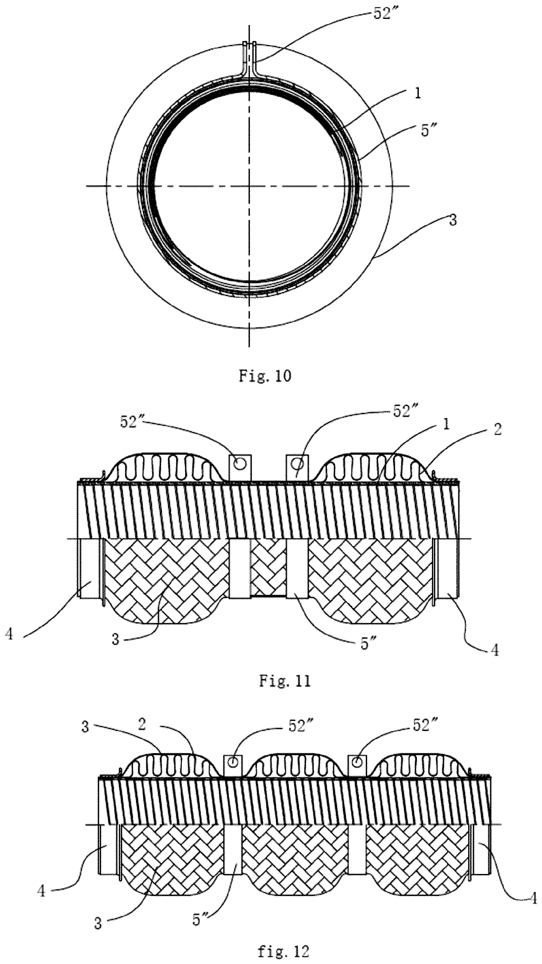

Figs. 9 and 10 schematically show the structure of the flexible joint for an exhaust pipe according to the seventh embodiment of the present disclosure. In this embodiment, the structures of the inner pipe 1, the bellows 2 and the braided hose 3 are the same as that of the first embodiment, and the different between them lies in the structure of the second fixing member 5". The second fixing member 5" is an integral ring-shaped clamp structure, and its two ends are respectively provided with a fixing lug 52" which protrudes outward. The fixing lugs 52" at both ends are fixedly connected to each other by a fastener or by welding so that the braided hose 3 is fixed on the outside of the bellows 2 by the second fixing member 5". Therefore, the braided hose 3 is divided into two segments and fixed to the outside of the bellows.

Fig. 11 schematically shows the structure of the flexible joint for an exhaust pipe according to the eighth embodiment of the present disclosure. In this embodiment, the structures of the inner pipe 1, the bellows 2 and the braided hose 3 are the same as those in the second embodiment, and the difference between them lies in the structure of the second fixing member 5", which is the same as the structure of the second fixing member 5" in the seventh embodiment.

Fig. 12 schematically shows the structure of the flexible joint for an exhaust pipe according to the ninth embodiment of the present disclosure. In this embodiment, the structures of the inner pipe 1, the bellows 2 and the braided hose 3 are the same as those in the third embodiment, and the difference between them lies in the structure of the second fixing member 5", which is the same as the structure of the second fixing member 5" in the seventh embodiment.

Therefore, it needs to be pointed out here that in the flexible joint structure for the exhaust pipe, the braided hose 3 includes at least two segments. The length of each segment is less than or equal to 200mm. Both ends of each segment of the braided hose are fixedly connected to the bellows 2 therein by the fixing members. The fixing members may be the same or different. They can employ multiple structures as disclosed in the above-mentioned embodiments, or other fixing structures.

It needs to be pointed out here that the braided hose 3 can be an integral structure as in the above-mentioned embodiments, in which the two ends of the braided hose 3 are fixed to the bellows therein by the first fixing member and the middle portion of the braided hose 3 is fixed to the bellows therein by the second fixing member. Through the arrangement of the second fixing member, the braided hose 3 is divided into multiple segments. Alternatively, the braided hose 3 itself may includes multiple separate segments. The end of each segment is fixedly connected to the bellows therein by the fixing member. Those skilled in the art can make a selection on the basis of the embodiments of the present application.

The fastener involved in the above embodiments can be screws, bolts, or other structures, such as screws and nuts, that cooperate with each other. The fastener may also be fixing pins, or fixing structures by direct welding, as long as it can realize tight attachment between two objects.

The braided hose is typically made of multiple strands of non-stretchable metal wires intersecting each other. Thus, the local movement of each strand is restricted, especially in the stretch direction along the length and the left-right directions, so that the large range deformation of the bellows can be restricted, thereby increasing the service life of the bellows. In addition, there are end caps at both ends to compress the braided hose on the straight segment of the bellows, and this radial compression force will press the braided hose on the surface of the bellows through the braided structure, thereby improving the damping effect of the bellows. However, this restriction effect is weak and the compression force is smaller in the case where the length of the flexible joint itself is relatively long.

In the case where the length of the flexible joint itself is relatively long, the gap between the bellows and the braided hose would increase when the flexible joint is subjected to axial compression force and radial force. The longer the flexible joint is, the larger the gap between the braided hose and the bellows is, resulting reduced damping capability of the braided hose.

In addition, when the flexible joint is subjected to axial torque, the stress on the bellows increases significantly, and fatigue break would likely occur. When there is a braided hose structure, since the movement of each wire strand is restricted, the torque will be transmitted to the braided hose so as to reduce the stress of the bellows and thus increase the life of the bellows. However, as the length of the bellows increases, its effect will also be reduced significantly.

In the flexible joint structure for an exhaust pipe according to the present disclosure, the braided hose has multiple relatively short segments and the ends of each segment of the braided hose are fixed to and pressed against the bellows such that the braided hose can be attached to the bellows therein tightly, resulting in increased damping performance which can improve the NVH performance of the entire vehicle. More importantly, since the ends of each segment of the braided hose are fixed to and pressed against the bellows and the wires of the braided hose are not able to be stretched, the movement of the bellows therein in the axial, radial and torsional direction at each end can be restrained. In this way, in the transverse front-wheel drive vehicle, when the front portion of the exhaust system swings greatly, due to the presence of the braided hose attached closely to the bellows, the shear deformation of the corrugated segment of the bellows therein can be transformed into the bending deformation while the middle straight segment are turned. In the longitudinal rear-wheel drive vehicle,when the front portion of the exhaust system rotates, the braided hose can share part of the torque well, thereby greatly reducing the stress of the internal bellows and increasing its service life. In addition, due to the reduced stress, flexible joints may have shorter length or smaller outer diameters, thereby overcoming the technical problem raised from the small space and the interference with the surrounding parts. Additionally, the use of high-temperature-resistant precious materials can also be reduced, resulting in lower costs.

The above disclosure is merely about the embodiments of the application but not used to limit the application. For those skilled in the art, the present application can have various modifications and changes. Any modification, equivalent replacement, improvement, etc. made within the spirit and principle of the present application shall be included in the scope of the claims of the present application.

## Claims

1. A flexible joint structure for an exhaust pipe, comprising a bellows (2) and a braided hose (3) that are arranged coaxially in sequence from inside to outside, wherein the braided hose (3) includes at least two segments, both ends of each segment are fixedly connected to the bellows (2) at an inner side of the braided hose (3) by means of a fixing member, and the length of each segment of the braided hose (3) is less than or equal to 200mm.

2. The flexible joint structure for an exhaust pipe according to claim 1, wherein the fixing member comprises a first fixing member located at an end of the bellows (2) and a second fixing member located at the middle portion of the bellows (2).

3. The flexible joint structure for an exhaust pipe according to claim 2, wherein, the braided hose (3) includes multiple segments which are separated and connected in sequence, and the ends of each segment are fixedly connected to the bellows (2) by means of the fixing member.

4. The flexible joint structure for an exhaust pipe according to claim 2, wherein the braided hose (3) has an integral structure, ends of the braided hose (3) are fixedly connected to the bellows (2) by means of the first fixing member, and the middle portion of the braided hose (3) is fixedly connected to the bellows (2) by means of the second fixing member, so as to form multiple segments.

5. The flexible joint structure for an exhaust pipe according to claim 2, wherein the structures of the first fixing member and the second fixing member are the same or different.

6. The flexible joint structure for an exhaust pipe according to claim 2, wherein: the first fixing member has an enclosed sleeve structure or a ring-shaped clamp structure; and the second fixing member has a ring-shaped clamp structure.

7. The flexible joint structure for an exhaust pipe according to claim 6, wherein:
in the case where the first fixing member is an enclosed sleeve structure, one side of the first fixing member has a flange, and at least one side of the second fixing member has a flange;
the first fixing member and/or the second fixing member have a ring-shaped clamp structure, ends of which are overlapped and fixed to each other;
the first fixing member and/or the second fixing member have a ring-shaped clamp structure which includes at least two connecting pieces connected with each other, ends of each connecting piece are provided with a fixing lug protruding outward, and the fixing lugs at ends of adjacent connecting pieces are fixed by welding or a fastener;
the first fixing member and/or the second fixing member have an integral ring clamp structure, each end of which has a fixing lug protruding outward, and the fixing lugs at ends are fixed by welding or a fastener; or
the first fixing member and/or the second fixing member fix the bellows and the braided hose through internal-expansion and external-pressure and/or by welding.

8. The flexible joint structure for an exhaust pipe according to claim 3 or 4, wherein, the bellows includes a straight segment and a corrugated segment, and the second fixing member is provided at the straight segment.

9. The flexible joint structure for an exhaust pipe according to claim 1, wherein the length of each segment of the braided hose (3) is 60mm-150mm.

10. The flexible joint structure for an exhaust pipe according to claim 9, wherein the length of each segment of the braided hose (3) is 60mm-120mm.

11. The flexible joint structure for an exhaust pipe according to any one of claims 1-10, further comprising an inner tube (1) coaxially arranged inside the bellows (2), wherein, an end of the inner tube (1) is fixedly connected with an end of the bellows (2), and the inner tube (1) is a buckle hose or a braided hose.

12. The flexible joint structure for an exhaust pipe according to any one of claims 1-11, wherein: the bellows has multiple bellows segments; both ends of each bellows segment are provided with a small corrugated portion; and the corrugation height in the small corrugated portion is lower than the corrugation height in a middle portion of a bellows segment.
